# EUROPEAN PATENT SPECIFICATION

(11) **EP 3 563 654 B1**
(45) Date of publication and mention of the grant of the patent: **21.12.2022**
(21) Application number: 19161928.7
(22) Date of filing: 11.03.2019
(51) Int. Cl.: A01B 79/00, A01D 41/14

(54) **AUTOMATIC HEADER CONTROL SIMULATION**
SIMULATION EINER AUTOMATISCHEN VORSATZGERÄTSTEUERUNG
SIMULATION DE CONTRÔLE AUTOMATIQUE D'UNE TÊTE DE COUPE

(30) Priority: 02.05.2018 US 201862665630 P
(43) Date of publication of application: 06.11.2019
(73) Proprietor: AGCO Corporation, Duluth, GA 30096 (US)
(72) Inventor: BERGEIJK, Jacob van, Hesston, Kansas 67062-0969 (US); GOOD, Grant Lewis, Hesston, Kansas 67062 (US)
(74) Representative: AGCO Intellectual Property Department

(56) References cited:
- EP-A1- 1 374 661
- EP-A1- 2 695 511
- WO-A1-2014/127043

## Description

### TECHNICAL FIELD

The present disclosure is generally related to work vehicles with implements, and, in particular, agricultural vehicles with implements.

### BACKGROUND

Work vehicles in many industries often use ground-engaging implements to perform a working function for that vehicle. For instance, a snowplow may be coupled to the front of a dump truck during winter seasons for use in clearing roadways and/or parking lots. In the construction industry, front loaders use a wide bucket to scoop up and/or carry heavy loads, such as gravel or soil. In the agricultural industry, a combine harvester may have, coupled at the front of the tractor, a crop-engaging implement such as a corn header for harvesting corn, or a Draper header for harvesting wheat. Or, sprayer vehicles may use spray booms coupled to the rear of the vehicle to dispense product onto the soil.

With regard to the agricultural industry, and in particular, the combine harvester, an automatic header height control (AHHC) system is used to maintain the header in desired position relative to ground. For instance, the header should be positioned relative to the ground in a way that prevents damage to the header (e.g., from debris, obstacles, or from digging into the ground), while enabling efficient harvesting of the field (e.g., not too high to miss lower height crop, and not too low to collect debris). Historically, the automatic header height control system has needed to have implement control adjustment, such as manual sensitivity/parameter adjustments, performed by an operator to optimize field performance of the system for a given header width and/or type. Such adjustments may be made via controls at an operator console in a cab of the combine harvester, including via a user interface (e.g., graphical user interface rendered on a display monitor or switches/buttons/levers). In making such adjustments to the sensitivity, or aggressiveness, of header operation, there is typically a compromise between being too aggressive (e.g., harder on the system with a risk of over-reaction) and too lax (e.g., header digging into the ground in spots along the field, missing crop). The optimal settings vary depending on the exact header dimensions and weight, and may also vary based on the experience level and/or expertise of the operator.

International patent application WO 2014/127043 A1 describes an automatic calibration system for a harvester header height controller, in which an operator directs movement of the header through a series of setpoint positions. At each of the positions, one or more sensor readings are taken (which sensors are ordinarily used in header height control) and the readings are compared with pre-stored expected values. Any discrepancy is used by the system to calibrate the sensor outputs. Whilst the determination of calibration values is automated, the process as a whole is still reliant on operator control, which raises the risk of errors in what can be a tedious process for the operator.

### SUMMARY OF INVENTION

In accordance with one aspect of the invention there is provided a simulation system for adjusting settings of a vehicle having an implement coupled thereto, the simulation system comprising:
one or more feedback sensors for detecting physical movement of the implement; and
a computing system configured by instructions to:
   receive predefined simulated inputs corresponding to expected feedback from the one or more feedback sensors in response to movement of the implement attached to the vehicle, the simulated inputs being associated with anticipated physical movement of the implement;
   based on the inputs, provide an output to a control system operably coupled to the implement, the output causing physical movement of the implement based on one or more settings;
   receive feedback from the one or more feedback sensors indicating actual physical movement of the implement responsive to the output;
   compare physical movement of the implement with the anticipated physical movement associated with the simulated inputs; and
   in response to detecting a difference between the physical movement of the implement and the anticipated physical movement, cause a change in at least one of the one or more settings corresponding to control of the implement based on the feedback.

By using predefined simulated inputs corresponding to expected feedback from the one or more feedback sensors to direct the physical movement, operator involvement (with the consequent risk of errors) is removed. This wholly autonomous calibration procedure allows, for example, a sequence of expected sensor readings to be scheduled to generate a sequence of actual implement movements without requiring operator input.

In accordance with a second aspect of the invention there is provided a simulation method
for adjusting settings of a vehicle having an implement coupled thereto, the simulation method comprising:
receiving predefined simulated inputs corresponding to expected feedback from the one or more feedback sensors in response to movement of the implement attached to the vehicle, the simulated inputs being associated with anticipated physical movement of the implement;
providing an output to a control system operably coupled to the implement based on the inputs, the output causing physical movement of the implement based on one or more settings;
receiving feedback from one or more feedback sensors indicating actual physical movement of the implement responsive to the output;
comparing physical movement of the implement with the anticipated physical movement associated with the simulated inputs; and
causing a change in at least one of the one or more settings corresponding to control of the implement based on the feedback in response to detecting a difference between the physical movement of the implement and the anticipated physical movement..

The invention further provides a non-transitory, computer readable medium comprising instructions that, when executed by a computing system, causes the computing system to implement the above method.

Further aspects of the invention are defined by the attached subclaims.

### BRIEF DESCRIPTION OF THE DRAWINGS

Many aspects of the invention can be better understood with reference to the following drawings. The components in the drawings are not necessarily to scale, emphasis instead being placed upon clearly illustrating the principles of the present invention. Moreover, in the drawings, like reference numerals designate corresponding parts throughout the several views.
FIG. 1 is a schematic diagram that illustrates, in truncated, side elevation view, a front portion of a combine harvester and coupled header showing an example arrangement of sensors and controls for an embodiment of an automatic header control simulation system.
FIG. 2 is a schematic diagram that illustrates an embodiment of an automatic header control simulation system.
FIG. 3 is a block diagram that illustrates an example data structure used in an embodiment of an automatic header control simulation system.
FIG. 4 is a block diagram of an example computing system used in an embodiment of an automatic header control simulation system.
FIG. 5 is a flow diagram that illustrates an embodiment of an automatic header control simulation method.

### DESCRIPTION OF EXAMPLE EMBODIMENTS

Certain embodiments of an automatic header control simulation system and method embodying the invention are disclosed that incorporate into a vehicle (e.g., combine harvester) a self-test of an automatic header height control (AHHC) system during a calibration procedure to enable the AHHC system to learn optimal settings for control of an installed implement (header). In one embodiment, sensor inputs (e.g., corresponding to implement movement) from a given test scenario are simulated (e.g., via emulation of receipt of the signals or generation of the signals via a signal generator), and a computing system (e.g., one or more controllers) is configured to adjust control algorithms and/or parameters to optimize header control (e.g., a response of an AHHC system, position/orientation, float pressure, etc.) for the installed header.

Digressing briefly, settings for conventional AHHC systems are manually adjusted by an operator, such as when installing a header (e.g., switching over for the particular crop, seasonally, etc.). For instance, headers of different masses (e.g., different widths, different weights, etc.) require different response characteristics for the AHHC system, and hence control parameters such as sensitivity should be tuned accordingly. The operator may select controls in a user interface (e.g., graphical user interface (GUI) and/or switches/levers) of the operator's console in a cab of the combine harvester. The process of adjusting settings is operator specific, and varies depending on the skill level and/or expertise of the operator. By contrast, certain embodiments of an automatic header control simulation system comprise a computing system that automatically determines the appropriate (indeed optimized) response settings based on a simulated input, removing the subjectivity typical in current adjustment processes, which may improve performance and reduce operator involvement.

Having summarized certain features of an automatic header control simulation system embodying the present invention, reference will now be made in detail to the description of an automatic header control simulation system as illustrated in the drawings. While an automatic header control simulation system will be described in connection with these drawings, there is no intent to limit it to the embodiment or embodiments disclosed herein. For instance, in the description that follows, one focus is on a combine harvester for the agricultural industry, though it should be appreciated within the context of the present invention that other work vehicles that use a similar manual process to adjust the settings for operation of a coupled implement may be used in some embodiments, and hence are contemplated to be within the scope of the present invention. For instance, certain embodiments of a simulation system according to the invention may be used to automatically adjust settings for a skid steer loader, wheel loader, snowplow, spray boom, among other vehicles, implements, and/or industries. Further, although the description identifies or describes specifics of one or more embodiments, such specifics are not necessarily part of every embodiment, nor are all various stated advantages necessarily associated with a single embodiment or all embodiments. On the contrary, the intent is to cover all alternatives, modifications and equivalents included within the scope of the appended claims.

Note that references hereinafter made to certain directions, such as, for example, "front", "rear", "left" and "right", are made as viewed from the rear of the combine harvester looking forwardly. Also, reference to an implement is intended to include headers, booms, or other work implements, coupled either to the front of the vehicle or the rear of the vehicle.

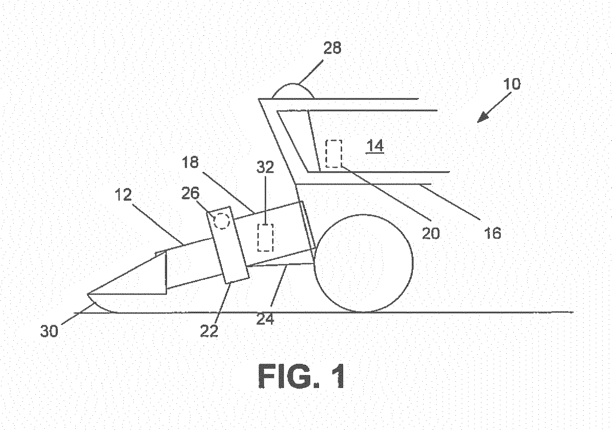

Referring now to FIG. 1, shown is a fragmentary (e.g., front portion), side-elevation view of an example vehicle in the form of a combine harvester 10 (hereinafter, also referred to simply as a combine 10), which illustrates an example environment in which an embodiment of an automatic header control simulation system may be implemented. In particular, FIG. 1 illustrates an example arrangement of sensors and controls in the combine harvester 10 for an embodiment of an automatic header control simulation system that in part are used to optimize settings for control of a header 12, including sensitivity/aggressiveness of a header 12. While a focus of the examples are illustrative for header control in the form of sensitivity adjustment, it should be appreciated by one having ordinary skill in the art that settings for other and/or additional types of implement control, including position/elevation and/or orientation of the header 12, float pressure, etc., may be adjusted based on operation of certain embodiments of an automatic header control simulation system, and hence are contemplated to be within the scope of the invention. It should be appreciated by one having ordinary skill in the art that, though the vehicle is shown as a combine harvester, other types of vehicles with a front or rear mounted implement, in the same or other industries, may be used, and hence are contemplated to be within the scope of the invention. The combine 10 comprises a cab 14 mounted on a chassis 16, and further comprises a feeder house 18 that couples the header 12 to the chassis 16. Though shown with a front-mounted corn header 12, other header configurations are also applicable, including headers for the harvesting of wheat or other crop. The cab 14 effectively provides a command and control center for an operator in a controlled environment. In one embodiment, the cab 14 includes a computing system 20 to provide the aforementioned command and control for the combine 10, as explained further below.

As is known, the feeder house 18 functions in part as an independently-moveable portion of the combine 10. The feeder house 18 comprises a lateral tilt assembly 22, which rolls about an axis coincident with the fixed frame of the feeder house 18. The lateral tilt assembly 22 surrounds the front face of the feeder house 18. Reference hereinafter to the feeder house 18 contemplates incorporation of the lateral tilt assembly 22. The combine 10 comprises one or more hydraulic circuits that comprise the functionality required to enable movement of the header 12. In some embodiments, all or a portion of the hydraulic circuit functionality described herein may be replaced with other types of control, including electrical-based control (e.g., electromagnetic actuators, electrical actuators, etc.). In one embodiment, the lifting (e.g., raising and lowering) movement of the header 12 is achieved in part via one or more hydraulic cylinders 24 coupled between the chassis 16 and the lower portion of the feeder house 18, as is known. The tilt movement of the header 12 is achieved in part via one or more hydraulic cylinders 26 coupled to the lateral tilt assembly 22. More specifically, the feeder house 18 moves correspondingly relative to the traversed terrain with the navigational movement of the combine 10, and the hydraulic circuit (e.g., including cylinder(s) 24) may be actuated by the computing system 20 of the combine 10 to raise and lower the feeder house 18. Further, the cylinder(s) 26 of the hydraulic circuit may be actuated by the computing system 20 to cause the tilt assembly 22 of the feeder house 18 to roll relative to an axis running longitudinally through the feeder house 18. For instance, the rolling movement is based on a known assembly of the hydraulic piston/cylinder unit 26 and clevis in cooperation with one or more rollers and roller tracks mounted behind the face (e.g., top face) of the lateral tilt assembly 22. Additional details of an example of a lateral tilt assembly may be found in commonly assigned U.S. Patent 5,918, 448, though other structures or mechanisms to enable the rolling movement of the lateral tilt assembly 22 may be used. Such movements of the feeder house 18 and/or lateral tilt assembly 22 not only facilitate the alignment of the feeder house 18 with a target crop area of the header 12, but also enable the header 12 to more closely follow the contours of the ground during operations over terrain (which may vary in contour). For instance, to cut the grain crop at a consistent height, the tilt assembly 22 of the feeder house 18 enables the header 12 to be selectively tiltable laterally relative to the combine 10 to thereby follow the contours of the ground over which the combine 10 operates. Cut crop material enters from an opening in the rear of the header 12 and into an opening (not shown) defined by the front face of the feeder house 18. From the feeder house 18, the cut crop is fed into the combine 10, with, for instance, the grain being threshed and separated therein from the plant residue in a known manner.

As to controls, in addition to the computing system 20, the combine 10 also comprises a global navigation satellite system (GNSS) device 28, which enables satellite-guided navigation for the combine harvester 10. In one embodiment, the GNSS device 28 is mounted atop the cab 14, though in some embodiments, the GNSS device 28 may be located elsewhere in or on the combine harvester 10. The GNSS device 28 comprises a receiver and possibly inertial sensors for use in guided travel, and may be configured for use in global positioning systems (GPS), GLONASS, Galileo, among other constellations. For instance, autonomous steering functionality for the combine 10 may be achieved based on signals from the GNSS device 28 and corresponding software logic residing in the computing system 20.

The combine 10 also comprises one or more header sensors, including header sensor 30, which is secured proximal to the snout of the header 12. In some embodiments, the header sensor 30 may be located elsewhere (e.g., proximal to the cutting bar in a Draper header, among other locations depending on the design of the header, crop type, and/or type of header sensor). Note that the header sensor 30 is depicted as what some in the industry refer to as a drag rod, such as the type manufactured by Headsight Harvesting Solutions (e.g., a polyarm height sensor), which comprise a ground engaging sensor to monitor the height or changes in height and/or tilt and/or changes in tilt of the header 12. In practice, there may be plural header sensors 30 distributed among plural snouts of a corn header (or along the front edge, proximal the cutter bar, of other types of headers). In some embodiments, non-contact types of header sensors may be used, including time of flight based (e.g., radar, acoustic based, etc.) sensors or non-time of flight sensors (e.g., optical). In some embodiments, one or more sensors may be used to monitor hydraulic fluid pressure to the tilt influencing cylinder 26 and/or height influencing cylinders 24, where changes in pressure and/or absolute pressure are translated to changes in height/tilt or absolute height/tilt, respectively. In certain embodiments of an automatic header control simulation system, inputs simulating the movement of the header 12 are used in place of the actual signals from one or more of these types of header sensor 30. In some embodiments, the simulated inputs may also include inertial/position inputs.

In one embodiment, the combine 10 also comprises a feedback sensor 32. In some embodiments, there may be more than one feedback sensor 32. The feedback sensor 32 is used to monitor the actual height and/or tilt change of the feeder house 18 and/or tilt assembly 22 based on the output of the computing system 20, which in turn is based on the simulated inputs of header movement. The feedback sensor(s) 32 may be located elsewhere, for instance, at or integrated with the hydraulic cylinders 24 and/or 26 (e.g., to measure stroke, which may be translated by the computing system 20 to a corresponding change in height or tilt).

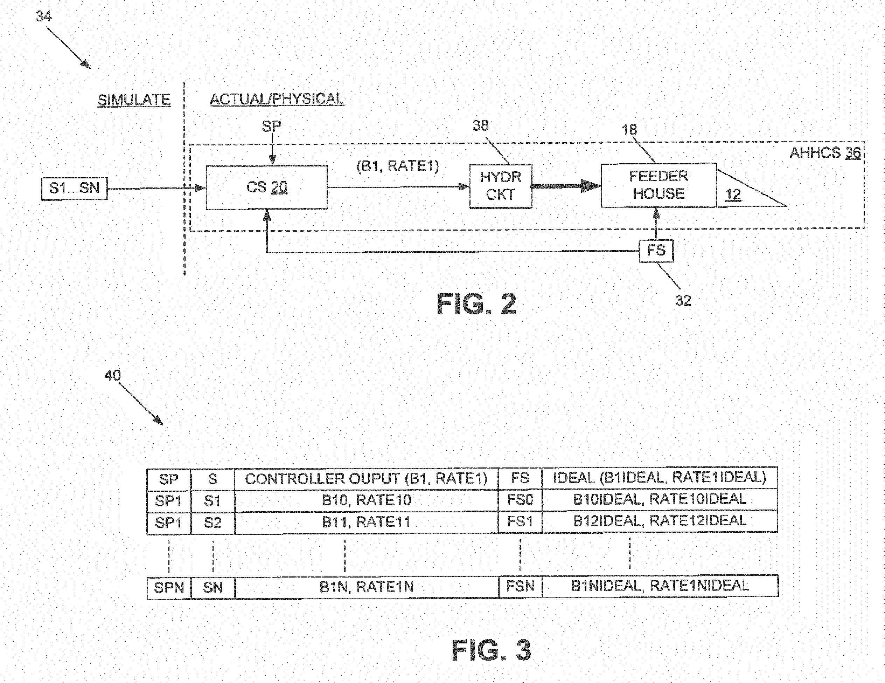

Referring now to FIG. 2, shown is an embodiment of an example automatic header control simulation system 34. It should be appreciated by one having ordinary skill in the art, that the automatic header control simulation system 34 depicted in FIG. 2 is one illustrative example, and that in some embodiments, additional elements and/or a different arrangement of sensors and control components may be used,. In general, the automatic header control simulation system 34 comprises a simulate component (SIMULATE) and an actual/physical component (ACTUAL/PHYSICAL). As explained above, predefined simulated inputs (e.g., S1 through SN) corresponding to simulated, anticipated physical movement of the header 12 comprise the simulate component. The inputs may comprise emulating (in software of the computing system (CS) 20) receipt of signals corresponding to sensed header movement, or the inputs may be physically generated by a signal generator actually delivering signals to the computing system 20. As depicted in FIG. 2, those inputs are received in the automatic header height control system (AHHCS) 36. In one embodiment, the automatic header height control system 36 comprises the computing system 20, a hydraulic circuit (HYDR CKT) 38, a feeder house 18 (which includes the lateral tilt assembly 22 (not explicitly depicted in FIG. 2)) coupled to a header 12, and one or more feedback sensors (FS) 32. Note that in some embodiments, all or a portion of the hydraulic circuit 38 may be replaced with an electrical-based control(s). Electronic communications among the devices of the automatic header height control system 36 may be achieved over a wired medium (e.g., one or more CAN busses), over a wireless medium (e.g., using Bluetooth, near field communications, 802.11, etc.), or via a combination of a wired and wireless mediums.

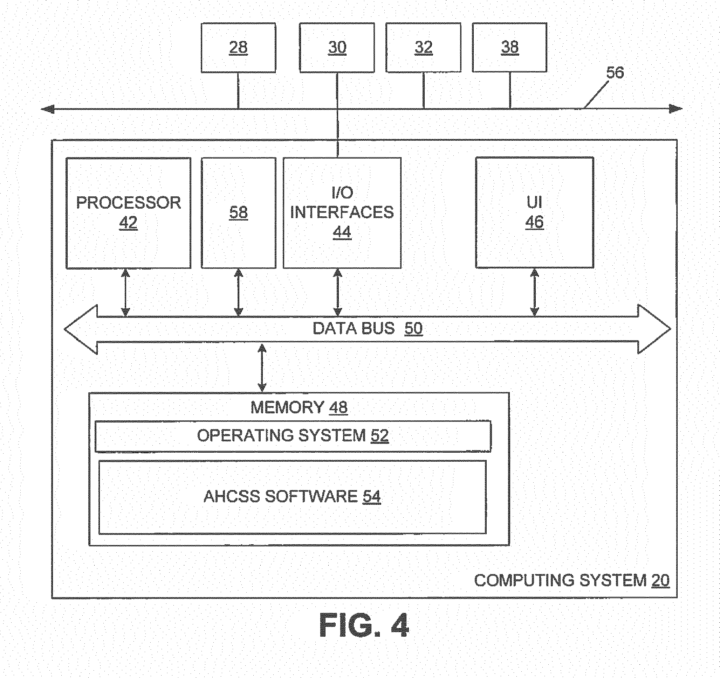

The computing system 20 comprises one or more controllers, with an example hardware and software architecture for a computing system comprising a single controller described below in association with FIG. 4. The computing system 20 provides an output signal comprising an error signal that is based on a comparison of the inputs simulating header movement with setpoints (SP) for one or more parameters (e.g., height, tilt, pressure, sensitivity or rate of change). The hydraulic circuit 38 may include one or more valves, each having an actuator (e.g., solenoid, motor, etc.) coupled thereto, and one or more hydraulic cylinders (e.g., hydraulic cylinders 24 and 26, FIG. 1). The actuators receive the output signals from the computing system 20 and responsively actuate the hydraulic valves to cause a change in fluid flow through the valves and hence through the hydraulic cylinders of the hydraulic circuit 38. The feeder house 18 receives hydraulic fluid flow from the hydraulic circuit 38, wherein changes in the flow result in movement (e.g., changes in magnitudes of height and/or tilt and rate of change) of the feeder house 18 and hence movement of the header 12. The feedback sensor (FS) 32 monitors the actual change in height and/or tilt of the feeder house 18, and provides a feedback signal back to the computing system 20. The computing system 20 compares the actual values to expected or ideal values, and also the rate of change or sensitivity, and responsively causes a change in settings (e.g., the sensitivity settings) pertaining to header movement control. As indicated above, the sensitivity settings are one illustrative example of implement control, and other and/or additional controls may be adjusted based on the feedback. The deviations from ideal or expected may be presented by the computing system 20 to an operator (e.g., on a display monitor) with suggestions on changing the sensitivity settings (prompting operator intervention), or the sensitivity settings may be changed automatically (with or without alerting the operator of these changes).

In some embodiments, the computing system 20 may provide an indication pertaining to diagnostics of components of the automatic header height control system 36. For instance, a comparison of actual to ideal performance may be presented to the operator, or the computing system 20 may determine a threshold deterioration of performance and alert the operator (e.g., flag a suspect component of the automatic header height control system 36, such as a failing hydraulic valve or motor at a threshold (e.g., 10%) diminished performance for the system 36 or the component).

Explaining operations of the automatic header control further, and with continued reference to FIG. 2, attention is directed to FIG. 3. FIG. 3 shows a data structure 40 with recorded entries for parameter setpoint(s) (SP), inputs simulating header movement (S) (e.g., simulating header sensor inputs), controller output, feedback data (e.g., recording actual movement of the feeder house 18), and expected or ideal feeder house movement corresponding to the header movement. In the depicted example data structure 40, for a setpoint value for each parameter (e.g., height, tilt, sensitivity), various values for all of the other entries are recorded. Note that rate of change, sensitivity, and aggressiveness are all used interchangeably within this description. For instance, for a setpoint of SP1 (which may include height, tilt, and/or sensitivity), plural inputs (S1-SN) are generated (e.g., sent to the computing system 20 or emulated), the inputs corresponding to different header heights, tilts, and/or sensitivity for the installed header). The identification of the header may be input into the system by an operator, or acquired via other mechanisms (e.g., extracted using RFID technology, image capture, etc.). The setpoint may be inputted by an operator, or inserted automatically based on detection of the field (e.g., using historical data and a GNSS location). Responsively, the computing system 20 compares the setpoint (note that the term setpoint, though written in singular, is intended to mean a combination of parameters of height and/or tilt) to each respective value of inputs (S) (e.g., simulated header heights, tilts) while recording the sensitivity, and outputs an error or correction value that attempts to correct the deviation from setpoint as indicated by the inputs (S).

The outputs may include a parameter magnitude and/or vector (e.g., height change and/or tilt change, B1) and a rate of change or sensitivity (Rate1). In one embodiment, the output is formatted as a proportional control signal (e.g., pulse width modulated signal). In other words, a correction or error signal for each input for a given setpoint is recorded, including B10, Rate10, B11, Rate11, etc. The output is delivered to the hydraulic circuit 38 (e.g., to an actuator or actuators of the hydraulic circuit), causing a change in fluid flow through the cylinders responsible for header height and/or tilt, the fluid flow represented in FIG. 2 by the bolder arrow between the hydraulic circuit 38 and the feeder house 18), which in turn causes a change in movement of the feeder house (e.g., raised, lowered, tilted at the same rate or at an increased or decreased rate). The feedback sensor 32 measures the actual change (e.g., FS0, FS1, etc.) for each output and delivers the feedback to the computing system 20. The computing system 20 compares the feedback data on the actual change to an expected or ideal performance (e.g., magnitude change, B10ideal, rate change rate10ideal, etc.) for each output. In other words, the performance in terms of height change, tilt change, and sensitivity is compared by the computing system 20 to historical expected or experimentally determined ideal values of those measures for the given combination of inputs and setpoints. As a result of the comparison, where there is a discrepancy (or percentage discrepancy, such as 0.1%, or 1%, or 10%, depending on historical data of performance, experimental for determining a threshold discrepancy) between expected/ideal and actual, the computing system 20 causes a change in settings pertaining to one or more implement controls (e.g., the sensitivity settings).

In some embodiments, as explained above, the computing system 20 may provide diagnostic feedback based on the comparison of actual versus ideal performance. For instance, a threshold performance may be set, where the manufacturer may recommend that, if even the best selection from the data structure 40 results in performance less than a threshold (e.g., 10% below ideal), then a flag is triggered alerting the operator of a potential problem or diminished capability of one or more components of the automatic header height control system 36. In some embodiments, the visualization of some representation of all or a portion of the data structure 40 may be presented to the operator on a display monitor in, for instance, the cab 14 (FIG. 1), which may inherently reflect the diminished capacity. In some embodiments, the visualization may include performance of one or more components of the automatic header height control system 36, and the combination of the diminished capacity and the data on the one or more components may assist the operator in diagnosing a potential problematic component. In some embodiments, a simple alert to the operator (in a graphical user interface or console light (LED) or audio alert in the form of a buzzer, beeper, etc.) may indicate to the operator a potential diminished capability based on the comparison by the computing system 20 of the actual and idea performance.

Having described an embodiment of an example automatic header control simulation system 34, attention is directed to an example computing system 20 as shown in FIG. 4. The computing system 20 is depicted in FIG. 4 as a single controller, though in some embodiments, the computing system 20 may comprise a plurality of controllers distributed within the automatic header control simulation system 34 shown in FIG. 2. One having ordinary skill in the art should appreciate that the example computing system 20 is merely illustrative, and that some embodiments of the computing system 20 may comprise fewer or additional components, and/or some of the functionality associated with the various components depicted in FIG. 4 may be combined, or further distributed among additional modules, in some embodiments. The computing system 20 is depicted in this example as a computer or computing device, but may be embodied as a programmable logic controller (PLC), FPGA, ASIC, among other devices. It should be appreciated that certain well-known components of computers are omitted here to avoid obfuscating relevant features of the computing system 20. In one embodiment, the computing system 20 comprises one or more processors, such as processor 42, input/output (I/O) interface(s) 44, a user interface 46, and memory 48, all coupled to one or more data busses, such as data bus 50.

The memory 48 may include any one or a combination of volatile memory elements (e.g., random-access memory RAM, such as DRAM, and SRAM, etc.) and nonvolatile memory elements (e.g., ROM, hard drive, tape, CDROM, etc.). The memory 48 may store a native operating system, one or more native applications, emulation systems, or emulated applications for any of a variety of operating systems and/or emulated hardware platforms, emulated operating systems, etc. In the embodiment depicted in FIG. 4, the memory 48 comprises an operating system 52 and automatic header control simulation system (AHCSS) software 54. In some embodiments, all or a portion of the automatic header control simulation system software 54 may be implemented in hardware. It should be appreciated by one having ordinary skill in the art that in some embodiments, additional or fewer software modules (e.g., combined functionality) may be employed in the memory 48 or additional memory. In some embodiments, a separate storage device may be coupled to the data bus 50, such as a persistent memory (e.g., optical, magnetic, and/or semiconductor memory and associated drives).

The processor 42 may be embodied as a custom-made or commercially available processor, a central processing unit (CPU) or an auxiliary processor among several processors, a semiconductor based microprocessor (in the form of a microchip), a macroprocessor, one or more application specific integrated circuits (ASICs), a plurality of suitably configured digital logic gates, and/or other well-known electrical configurations comprising discrete elements both individually and in various combinations to coordinate the overall operation of the computing system 20.

The I/O interfaces 44 provide one or more interfaces to a network comprising a communication medium 56, which may be a wired medium (e.g., CAN bus) as depicted in FIG. 4, a wireless medium (e.g., Bluetooth channel(s)), or a combination of wired and wireless mediums. In other words, the I/O interfaces 44 may comprise any number of interfaces for the input and output of signals (e.g., analog or digital data) for conveyance over one or more communication mediums. In the depicted embodiment, the GNSS device 28, the header sensors 30, and the hydraulic circuit 38 (e.g., the electromagnetic control components of the hydraulic circuit), described above, are coupled to the medium 56, enabling communication of signals/data with the computing system 20 via the I/O interfaces 44. Additional components may be coupled to the medium 56, including other sensors, controllers, actuators, and/or telephony/radio components (e.g., cellular and/or radio frequency (RF) modem), enabling communications with the computing system 20.

The user interface (Ul) 46 may be a keyboard, mouse, microphone, touch-type display device, head-set, FNR joystick, and/or other devices (e.g., switches) that enable input by an operator (e.g., such as while in the cab 14 (FIG. 1)) and/or outputs (e.g., visual, audible, and/or tactile feedback of operations and/or responses to inputs). In one embodiment, the user interface 46 enables the setpoints to be established by the operator for the automatic header height control system 36, for adjustments to sensitivity (e.g., in embodiments where not performed automatically) based on comparisons to expected and/or ideal performance, and for feedback of performance and/or performance/component issues.

Note that in some embodiments, the manner of connections among two or more components may be varied. For instance, in some embodiments, the user interface 46 may be connected to the medium 56, and in communication with the computing system 20 via the I/O interfaces 44.

The automatic header control simulation system software 54 comprises executable code/instructions that, when executed by the processor 42, receives the simulated inputs corresponding to header movement, compares the inputs to the setpoint (e.g., of the header height, tilt, and/or sensitivity), outputs an error signal (e.g., proportional control signal, including pulse width modulated signal, pulse amplitude modulation, pulse code modulation, etc.) to the hydraulic circuit 38 (also referred to herein as a control system) to cause an adjustment in header height, tilt, and/or rate of change (via the feeder house 18 (FIG. 1)), and receives feedback via feedback sensor 32 (or sensors) of the feeder house movement, and compares the actual movement indicated by the signal from the feedback sensor 32 to an expected or ideal performance. For instance, the automatic header control simulation system software 54 receives feedback (from one or more sensors) indicating movement of the header in response to the output that is based on the error signal, compares the physical movement of the header with the anticipated physical movement associated with the simulated inputs, and responsive to detecting a difference between the physical movement of the header and the anticipated physical movement, causes a change in one or more settings corresponding to control of the header (based on the feedback). In one embodiment, the automatic header control simulation system software 54 alerts an operator to adjust a setting pertaining to implement control, including a sensitivity setting, to cause operation to more resemble ideal/expected performance. For instance, expected or ideal performance may correspond to lowering the sensitivity to avoid over aggressive operations, such as that causing excessive wear and tear on the combine components, or raise the sensitivity to avoid lax performance, such as digging the header into the ground or missing crop. The alert may be provided to the operator via the user interface 46. In some embodiments, the automatic header control simulation system software 54 may automatically adjust the sensitivity setting or other or additional settings (e.g., without operator intervention). In some embodiments, the automatic header control simulation system software 54 may adjust the sensitivity (and/or other control) and then alert the operator of the change, or alert the operator of the impending change with or without providing an opportunity for the operator to intervene. In some embodiments, the automatic header control simulation system software 54 may provide diagnostic feedback in the manner explained above. Once the settings have been established over this calibration period, the simulation process may end without operator intervention, enabling normal combine operations (e.g., with simulated inputs of header performance switching to actual inputs from the header sensors 30). In some embodiments, the automatic header control simulation system software 54 may alert the operator of the completion of the calibration process and await an input corresponding to an acknowledge button presented on the user interface 46 before commencing normal (non-simulation) operations.

As explained above, the simulated inputs of header movement may be achieved via emulation of receipt of such inputs in the automatic header control simulation system software 54. In some embodiments, a signal generator 58 coupled to the data bus 50 (or elsewhere, such as coupled to the medium 56) may be used to generate simulated inputs corresponding to header movement.

Execution of the automatic header control simulation system software 54 is implemented by the processor 42 under the management and/or control of the operating system 52. In some embodiments, the operating system 52 may be omitted and a more rudimentary manner of control implemented.

In some embodiments, functionality of the automatic header control simulation system software 54 may be distributed among plural controllers (and hence, plural processors). For instance, one controller may be disposed between the header sensors 30 (FIG. 1) and the computing system 20, and another between the computing system 20 and the hydraulic circuit 38 (FIG. 3) to achieve functionality of the automatic header height control system 36 or the automatic header control simulation system 34. Other arrangements may be used in some embodiments. In such embodiments, each controller may be similarly configured in hardware and/or software (e.g., one or more processors, memory comprising executable code/instructions, etc.) as the computing system 20, with the control strategy including a peer-to-peer or master-slave control arrangement.

When certain embodiments of the computing system 20 are implemented at least in part with software (including firmware), as depicted in FIG. 4, it should be noted that the software can be stored on a variety of non-transitory computer-readable medium for use by, or in connection with, a variety of computer-related systems or methods. A computer-readable medium may comprise an electronic, magnetic, optical, or other physical device or apparatus that may contain or store a computer program (e.g., executable code or instructions) for use by or in connection with a computer-related system or method. The software may be embedded in a variety of computer-readable mediums for use by, or in connection with, an instruction execution system, apparatus, or device, such as a computer-based system, processor-containing system, or other system that can fetch the instructions from the instruction execution system, apparatus, or device and execute the instructions.

When certain embodiments of the computing system 20 are implemented at least in part with hardware, such functionality may be implemented with any or a combination of the following technologies, which are all well-known in the art: a discrete logic circuit(s) having logic gates for implementing logic functions upon data signals, an application specific integrated circuit (ASIC) having appropriate combinational logic gates, a programmable gate array(s) (PGA), a field programmable gate array (FPGA), etc.

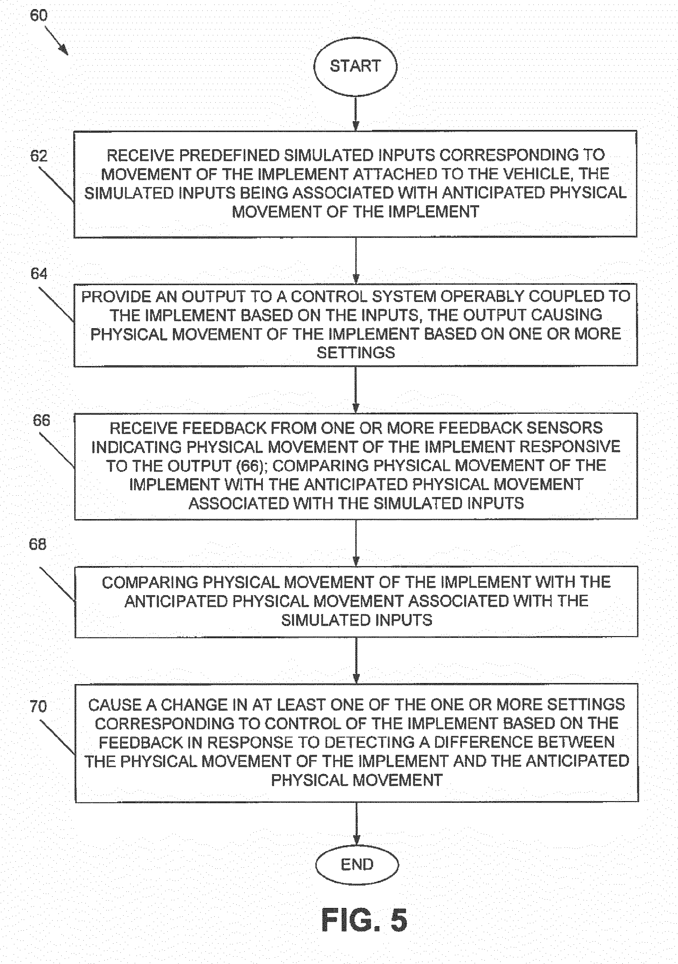

Having described certain embodiments of automatic header control simulation system 34 (FIG. 2), it should be appreciated that one embodiment of an automatic header control simulation method, denoted as method 60 (e.g., as implemented by the automatic header control simulation system software 54) and illustrated in FIG. 5, comprises receiving predefined simulated inputs corresponding to movement of the implement attached to the vehicle, the simulated inputs being associated with anticipated physical movement of the implement (62); providing an output to a control system operably coupled to the implement based on the inputs, the output causing physical movement of the implement based on one or more settings (64); receiving feedback from one or more feedback sensors indicating physical movement of the implement responsive to the output (66); comparing physical movement of the implement with the anticipated physical movement associated with the simulated inputs (68); and causing a change in at least one of the one or more settings corresponding to control of the implement based on the feedback in response to detecting a difference between the physical movement of the implement and the anticipated physical movement (70). For instance, the setting(s) corresponding to control of the implement may include sensitivity/aggressiveness of performance of the implement, lateral tilt/feeder house orientation/elevation, float pressure, among other controls for implement function/performance.

In some embodiments, fewer steps may be implemented, and in some embodiments, additional steps may be employed.

Note that in some embodiments, the method 60 may be implemented by the computing system 20 residing in the cab 14 (FIG. 1), or in some embodiments, the method 60 may be implemented by a controller of similar functionality located remotely from the combine 10 (FIG. 1). For instance, telephony or wireless radio functionality residing on the combine 10 may enable the communication of the settings, setpoint, and feedback sensor data to a remote controller (e.g., application server located external to the combine 10), where the processing is carried out remotely and command signals communicated wirelessly back to the combine 10 for effecting the change in the sensitivity adjustments and/or other adjustments.

Any process descriptions or blocks in flow diagrams should be understood as representing modules, segments, or portions of code which include one or more executable instructions for implementing specific logical functions or steps in the process, and alternate implementations are included within the scope of the embodiments in which functions may be executed out of order from that shown or discussed, including substantially concurrently or in reverse order, depending on the functionality involved, as would be understood by those reasonably skilled in the art.

Although the control systems and methods have been described with reference to the example embodiments illustrated in the attached drawing figures, it is noted that equivalents may be employed and substitutions made herein without departing from the scope of the disclosure as protected by the following claims.

## Claims

1. A simulation system for adjusting settings of a vehicle having an implement coupled thereto, the simulation system comprising:
one or more feedback sensors for detecting physical movement of the implement; and
a computing system configured by instructions to:
receive predefined simulated inputs corresponding to expected feedback from the one or more feedback sensors in response to movement of the implement attached to the vehicle, the simulated inputs being associated with anticipated physical movement of the implement;
based on the inputs, provide an output to a control system operably coupled to the implement, the output causing physical movement of the implement based on one or more settings;
receive feedback from the one or more feedback sensors indicating actual physical movement of the implement responsive to the output;
compare physical movement of the implement with the anticipated physical movement associated with the simulated inputs; and
in response to detecting a difference between the physical movement of the implement and the anticipated physical movement, cause a change in at least one of the one or more settings corresponding to control of the implement based on the feedback.

2. The simulation system of claim 1, wherein the computing system comprises one or more controllers.

3. The simulation system of claim 1 or 2, wherein the control system comprises a hydraulic circuit, wherein the change in settings causes a rate of change in hydraulic fluid flow through the hydraulic circuit that causes a corresponding movement of the implement.

4. The simulation system of claim 1, 2 or 3, wherein the output comprises a proportional control signal.

5. The simulation system of any preceding claim, wherein the computing system is configured to provide an output based on a comparison of the received inputs to one or more setpoints.

6. The simulation system of any preceding claim, wherein the computing system is configured to cause a change in the at least one of the one or more settings based on comparing the feedback with a benchmark.

7. The simulation system of claim 6, wherein the benchmark is based on one or a combination of past experience and experimental data.

8. The simulation system of any preceding claim, wherein the vehicle comprises a combine harvester having a feeder house and the implement comprises a header coupled to the feeder house, wherein the control system comprises a hydraulic circuit or an electrical-based control that adjusts movement of the feeder house.

9. The simulation system of any preceding claim, wherein the computer system is configured to cause a change in the at least one of the one or more settings with or without operator intervention.

10. The simulation system of any preceding claim, wherein the feedback further comprises diagnostic feedback, wherein the computer system is configured to provide an indication of lower than expected performance based on the feedback.

11. A simulation method for adjusting settings of a vehicle having an implement coupled thereto, the simulation method comprising:
receiving predefined simulated inputs corresponding to expected feedback from the one or more feedback sensors in response to movement of the implement attached to the vehicle, the simulated inputs being associated with anticipated physical movement of the implement;
providing an output to a control system operably coupled to the implement based on the inputs, the output causing physical movement of the implement based on one or more settings;
receiving feedback from one or more feedback sensors indicating actual physical movement of the implement responsive to the output;
comparing physical movement of the implement with the anticipated physical movement associated with the simulated inputs; and
causing a change in at least one of the one or more settings corresponding to control of the implement based on the feedback in response to detecting a difference between the physical movement of the implement and the anticipated physical movement.

12. The method of claim 11, wherein causing the change causes a rate of change in hydraulic fluid flow through the hydraulic circuit that causes a corresponding movement of the implement.

13. The method of claim 11 or 12, wherein the output comprises a proportional control signal.

14. The method of claim 11, 12 or 13, further comprising comparing the received inputs to one or more setpoints.

15. The method of any one of claims 11 to 14, further comprising comparing the feedback with a benchmark.

16. The method of any one of claims 11 to 15, wherein the benchmark is based on one or a combination of past experience and experimental data.

17. The method of any one of claims 11 to 16, wherein the vehicle comprises a combine harvester having a feeder house and the implement comprises a header coupled to the feeder house, wherein the control system comprises a hydraulic circuit or an electrical-based control that adjusts movement of the feeder house.

18. The method of any one of claims 11 to 17, wherein causing the change occurs with or without operator intervention.

19. The method of any one of claims 11 to 18, wherein the feedback further comprises diagnostic feedback, further comprising providing an indication of lower than expected performance based on the feedback.

20. A non-transitory, computer readable medium comprising instructions that, when executed by a computing system, causes the computing system to:
receive predefined simulated inputs corresponding to expected feedback from the one or more feedback sensors in response to movement of an implement attached to a vehicle, the simulated inputs being associated with anticipated physical movement of the implement;
provide an output to a control system operably coupled to the implement based on the inputs, the output causing physical movement of the implement based on one or more settings;
receive feedback from one or more feedback sensors indicating actual physical movement of the implement responsive to the output;
compare physical movement of the implement with the anticipated physical movement associated with the simulated inputs; and
cause a change in at least one of the one or more settings corresponding to control of the implement based on the feedback in response to detecting a difference between the physical movement of the implement and the anticipated physical movement.

## Patentansprüche

1. Simulationssystem zum Anpassen der Einstellungen eines Fahrzeugs mit einem damit verbundenen Arbeitsgerät, wobei das Simulationssystem das Folgende aufweist:
einen oder mehrere Rückmeldesensoren zum Feststellen einer physikalischen Bewegung des Arbeitsgeräts; und
ein Rechensystem, das durch Befehle für das Folgende konfiguriert ist:
Empfangen vordefinierter simulierter Eingänge, die einer erwarteten Rückmeldung von dem einen oder den mehreren Rückmeldesensoren entsprechen, als Antwort auf eine Bewegung des an dem Fahrzeug befestigten Arbeitsgeräts, wobei die simulierten Eingänge einer antizipierten physikalischen Bewegung des Arbeitsgeräts zugeordnet sind;
Bereitstellen eines Ausgangs für ein Steuersystem oder Regelsystem, das mit dem Arbeitsgerät wirkend verbunden ist, basierend auf den Eingängen, wobei der Ausgang eine physikalische Bewegung des Arbeitsgeräts basierend auf einer oder mehreren Einstellungen bewirkt;
Empfangen einer Rückmeldung von dem einen oder den mehreren Rückmeldesensoren, die eine tatsächliche physikalische Bewegung des Arbeitsgeräts als Reaktion auf den Ausgang indiziert;
Vergleichen der physikalischen Bewegung des Arbeitsgeräts mit der antizipierten physikalischen Bewegung, die den simulierten Eingängen zugeordnet ist; und
als Reaktion auf die Feststellung einer Differenz zwischen der physikalischen Bewegung des Arbeitsgeräts und der antizipierten physikalischen Bewegung: Bewirken einer Veränderung der oder mindestens einer Einstellung entsprechend der Steuerung oder Regelung des Arbeitsgeräts basierend auf der Rückmeldung.

2. Simulationssystem nach Anspruch 1, wobei das Rechensystem ein oder mehrere Steuergerät(e) oder Regelgerät(e) aufweist.

3. Simulationssystem nach Anspruch 1 oder 2, wobei das Steuersystem oder Regelsystem einen Hydraulikkreis aufweist, wobei die Veränderung der Einstellungen eine Veränderungsrate des hydraulischen Fluidflusses durch den Hydraulikkreis bewirkt, die eine entsprechende Bewegung des Arbeitsgeräts bewirkt.

4. Simulationssystem nach Anspruch 1, 2 oder 3, wobei der Ausgang ein proportionales Steuersignal oder Regelsignal aufweist.

5. Simulationssystem nach einem der vorhergehenden Ansprüche, wobei das Rechensystem geeignet konfiguriert ist, um einen Ausgang basierend auf einem Vergleich der empfangenen Eingänge mit einem oder mehreren Sollwerten bereitzustellen.

6. Simulationssystem nach einem der vorhergehenden Ansprüche, wobei das Rechensystem geeignet konfiguriert ist, um eine Veränderung mindestens einer Einstellung basierend auf einem Vergleich der Rückmeldung mit einem Richtwert zu bewirken.

7. Simulationssystem nach Anspruch 6, wobei der Richtwert auf einer früheren Erfahrung, experimentellen Daten oder einer Kombination davon beruht.

8. Simulationssystem nach einem der vorhergehenden Ansprüche, wobei das Fahrzeug einen Mähdrescher mit einem Einzugsgehäuse und das Arbeitsgerät ein mit dem Einzugsgehäuse verbundenes Vorsatzgerät aufweist, wobei das Steuersystem oder Regelsystem einen Hydraulikkreis oder eine elektrisch basierte Steuerung oder Regelung aufweist, der bzw. die eine Bewegung des Einzugsgehäuses anpasst.

9. Simulationssystem nach einem der vorhergehenden Ansprüche, wobei das Computersystem geeignet konfiguriert ist, um eine Veränderung der mindestens einen Einstellung mit oder ohne Eingriff eines Bedieners zu bewirken.

10. Simulationssystem nach einem der vorhergehenden Ansprüche, wobei die Rückmeldung weiterhin eine diagnostische Rückmeldung aufweist, wobei das Computersystem geeignet konfiguriert ist, um basierend auf der Rückmeldung einen Hinweis auf eine Leistung , die niedriger als erwartet ist, bereitzustellen.

11. Simulationsverfahren zum Anpassen von Einstellungen eines Fahrzeugs mit einem damit verbundenen Arbeitsgerät, wobei das Simulationsverfahren das Folgende aufweist:
Empfangen vordefinierter simulierter Eingänge, die einer erwarteten Rückmeldung von dem einen oder den mehreren Rückmeldesensoren entsprechen, als Antwort auf eine Bewegung des an dem Fahrzeug befestigten Arbeitsgeräts, wobei die simulierten Eingänge einer antizipierten physikalischen Bewegung des Arbeitsgeräts zugeordnet sind;
Bereitstellen eines Ausgangs für ein Steuersystem oder Regelsystem, das mit dem Arbeitsgerät wirkverbunden ist, basierend auf den Eingängen, wobei der Ausgang eine physikalische Bewegung des Arbeitsgeräts basierend auf einer oder mehreren Einstellungen bewirkt;
Empfangen einer Rückmeldung von dem einen oder den mehreren Rückmeldesensoren, die eine tatsächliche physikalische Bewegung des Arbeitsgeräts als Reaktion auf den Ausgang indiziert;
Vergleichen der physikalischen Bewegung des Arbeitsgeräts mit der antizipierten physikalischen Bewegung, die den simulierten Eingängen zugeordnet ist; und
Bewirken einer Veränderung mindestens einer der Steuerung oder Regelung des Arbeitsgeräts entsprechenden Einstellung basierend auf der Rückmeldung als Reaktion auf die Feststellung einer Differenz zwischen der physikalischen Bewegung des Arbeitsgeräts und der antizipierten physikalischen Bewegung.

12. Verfahren nach Anspruch 11, wobei das Bewirken der Veränderung eine Veränderungsrate des hydraulischen Fluidflusses durch den Hydraulikkreis bewirkt, die eine entsprechende Bewegung des Arbeitsgeräts bewirkt.

13. Verfahren nach Anspruch 11 oder 12, wobei der Ausgang ein proportionales Steuersignal oder Regelsignal aufweist.

14. Verfahren nach Anspruch 11, 12 oder 13, weiterhin mit dem Vergleichen der empfangenen Eingänge mit einem oder mehreren Sollwerten.

15. Verfahren nach einem der Ansprüche 11 bis 14, weiterhin mit dem Vergleichen der Rückmeldung mit einem Richtwert.

16. Verfahren nach einem der Ansprüche 11 bis 15, wobei der Richtwert auf einer früheren Erfahrung, experimentellen Daten oder einer Kombination davon beruht.

17. Verfahren nach einem der Ansprüche 11 bis 16, wobei das Fahrzeug einen Mähdrescher mit einem Einzugsgehäuse und das Arbeitsgerät ein mit dem Einzugsgehäuse verbundenes Vorsatzgerät aufweist, wobei das Steuersystem oder Regelsystem einen Hydraulikkreis oder eine elektrisch basierte Steuerung oder Regelung aufweist, der bzw. die eine Bewegung des Einzugsgehäuses anpasst.

18. Verfahren nach einem der Ansprüche 11 bis 17, wobei das Bewirken der Veränderung mit oder ohne Eingriff eines Bedieners erfolgt.

19. Verfahren nach einem der Ansprüche 11 bis 18, wobei die Rückmeldung eine diagnostische Rückmeldung aufweist, und weiterhin basierend auf der Rückmeldung ein Hinweis auf eine Leistung, die niedriger als erwartet ist, bereitgestellt wird.

20. Nicht-flüchtiges computerlesbares Medium mit Befehlen, die bei ihrer Ausführung durch ein Rechensystem bewirken, dass das Rechensystem das Folgende ausführt:
Empfangen vordefinierter simulierter Eingänge, die einer erwarteten Rückmeldung von dem einen oder den mehreren Rückmeldesensoren entsprechen, als Antwort auf eine Bewegung eines an einem Fahrzeug befestigten Arbeitsgeräts, wobei die simulierten Eingänge mit einer antizipierten physikalischen Bewegung des Arbeitsgeräts verbunden sind;
Bereitstellen eines Ausgangs für ein Steuersystem oder Regelsystem, das mit dem Arbeitsgerät wirkverbunden ist, basierend auf den Eingängen, wobei der Ausgang eine physikalische Bewegung des Arbeitsgeräts basierend auf einer oder mehreren Einstellungen bewirkt;
Empfangen einer Rückmeldung von dem einen oder den mehreren Rückmeldesensoren, die eine tatsächliche physikalische Bewegung des Arbeitsgeräts als Reaktion auf den Ausgang indiziert;
Vergleichen der physikalischen Bewegung des Arbeitsgeräts mit der antizipierten physikalischen Bewegung, die den simulierten Eingängen zugeordnet ist; und
Bewirken einer Veränderung mindestens einer der Steuerung oder Regelung des Arbeitsgeräts entsprechenden Einstellung basierend auf der Rückmeldung als Reaktion auf die Feststellung einer Differenz zwischen der physikalischen Bewegung des Arbeitsgeräts und der antizipierten physikalischen Bewegung.

## Revendications

1. Dispositif de simulation destiné à ajuster des paramètres d'un véhicule auquel un outillage est couplé, le dispositif de simulation comprenant :
un ou plusieurs capteurs de réaction afin de détecter le mouvement physique de l'outillage ; et
un dispositif informatique configuré par des instructions de manière à :
recevoir des entrées simulées prédéfinies correspondant à l'information de retour prévue du ou des capteurs de réaction en réponse au mouvement de l'outillage fixé sur le véhicule, les entrées simulées étant associées au mouvement physique anticipé de l'outillage ;
délivrer, sur la base des entrées, une sortie à un dispositif de commande couplé de manière opérationnelle à l'outillage, la sortie provoquant un mouvement physique de l'outillage sur la base d'un ou plusieurs paramètres ;
recevoir l'information de retour du ou des capteurs de réaction indiquant un mouvement physique réel de l'outillage en fonction de la sortie ;
comparer le mouvement physique de l'outillage au mouvement physique anticipé associé aux entrées simulées ; et
provoquer, en réponse à la détection d'une différence entre le mouvement physique de l'outillage et le mouvement physique anticipé, une modification sur au moins l'un du ou des paramètres correspondant à la commande de l'outillage sur la base de l'information de retour.

2. Dispositif de simulation selon la revendication 1, dans lequel le dispositif informatique comprend un ou plusieurs contrôleurs.

3. Dispositif de simulation selon la revendication 1 ou 2, dans lequel le dispositif de commande comprend un circuit hydraulique, dans lequel la modification sur les paramètres provoque une vitesse de variation du débit de fluide hydraulique à travers le circuit hydraulique qui provoque un mouvement correspondant de l'outillage.

4. Dispositif de simulation selon la revendication 1, 2 ou 3, dans lequel la sortie comprend un signal de commande proportionnel.

5. Dispositif de simulation selon l'une quelconque des revendications précédentes, dans lequel le dispositif informatique est configuré de manière à délivrer une sortie sur la base d'une comparaison des entrées reçues par rapport à un ou plusieurs points de consigne.

6. Dispositif de simulation selon l'une quelconque des revendications précédentes, dans lequel le dispositif informatique est configuré de manière à provoquer une modification sur le au moins un du ou des paramètres sur la base de la comparaison de l'information de retour à une valeur de référence.

7. Dispositif de simulation selon la revendication 6, dans lequel la valeur de référence est basée sur l'une d'une expérience antérieure et de données expérimentales ou une combinaison de ces dernières..

8. Dispositif de simulation selon l'une quelconque des revendications précédentes, dans lequel le véhicule comprend une moissonneuse batteuse comportant un compartiment d'alimentation et l'outillage comprend une tête de travail couplée au compartiment d'alimentation, dans lequel le dispositif de commande comprend un circuit hydraulique ou un dispositif de commande électrique qui ajuste le mouvement du compartiment d'alimentation.

9. Dispositif de simulation selon l'une quelconque des revendications précédentes, dans lequel le dispositif informatique est configuré de manière à provoquer une modification sur le au moins un du ou des paramètres avec ou sans intervention d'opérateur.

10. Dispositif de simulation selon l'une quelconque des revendications précédentes, dans lequel l'information de retour comprend, en outre, une information de retour de diagnostic, dans lequel le dispositif informatique est configuré de manière à fournir une indication de performance inférieure à la prévision sur la base de l'information de retour.

11. Procédé de simulation destiné à ajuster des paramètres d'un véhicule sur lequel un outillage est couplé, le procédé de simulation comprenant :
la réception d'entrées simulées prédéfinies correspondant à une information de retour prévue à partir de l'un du ou des capteurs de réaction en réponse au mouvement de l'outillage fixé sur le véhicule, les entrées simulées étant associées au mouvement physique anticipé de l'outillage ;
la fourniture d'une sortie à un dispositif de commande couplé de manière opérationnelle à l'outillage sur la base des entrées, la sortie provoquant le mouvement physique de l'outillage sur la base d'un ou plusieurs paramètres ;
la réception d'une information de retour à partir d'un ou plusieurs capteurs de réaction indiquant le mouvement physique réel de l'outillage en fonction de la sortie ;
la comparaison du mouvement physique de l'outillage au mouvement physique anticipé associé aux entrées simulées ; et
la production d'une modification sur au moins l'un du ou des paramètres correspondant à la commande de l'outillage sur la base de l'information de retour en réponse à la détection d'une différence entre le mouvement physique de l'outillage et le mouvement physique anticipé.

12. Procédé selon la revendication 11, dans lequel la production de la modification provoque une vitesse de variation du débit de fluide hydraulique à travers le circuit hydraulique qui provoque un mouvement correspondant de l'outillage.

13. Procédé selon la revendication 11 ou 12, dans lequel la sortie comprend un signal de commande proportionnel.

14. Procédé selon la revendication 11, 12 ou 13, comprenant, en outre, la comparaison des entrées reçues à un ou plusieurs points de consigne.

15. Procédé selon l'une quelconque des revendications 11 à 14, comprenant, en outre, la comparaison de l'information de retour à une valeur de référence.

16. Procédé selon l'une quelconque des revendications 11 à 15, dans lequel la valeur de référence est basée sur l'une d'une expérience antérieure et de données expérimentales ou une combinaison de ces dernières.

17. Procédé selon l'une quelconque des revendications 11 à 16, dans lequel le véhicule comprend une moissonneuse batteuse comportant un compartiment d'alimentation et l'outillage comprend une tête de travail couplée au compartiment d'alimentation, dans lequel le dispositif de commande comprend un circuit hydraulique ou un dispositif de commande électrique qui règle le mouvement du compartiment d'alimentation.

18. Procédé selon l'une quelconque des revendications 11 à 17, dans lequel la production de la modification est assurée avec ou sans intervention d'opérateur.

19. Procédé selon l'une quelconque des revendications 11 à 18, dans lequel l'information de retour comprend, en outre, l'information de retour de diagnostic, comprenant, en outre, la fourniture d'une indication de performance inférieure à la prévision sur la base de l'information de retour.

20. Support non transitoire pouvant être lu par ordinateur comprenant des instructions qui, lorsqu'elles sont exécutées par un dispositif informatique, conduisent le dispositif informatique à :
recevoir des entrées simulées prédéfinies correspondant à l'information de retour prévue à partir du ou des capteurs de réaction en réponse au mouvement d'un outillage fixé sur un véhicule, les entrées simulées étant associées au mouvement physique anticipé de l'outillage ;
fournir une sortie à un dispositif de commande couplé de manière opérationnelle à l'outillage sur la base des entrées, la sortie provoquant le mouvement physique de l'outillage sur la base du ou des paramètres ;
recevoir l'information de retour à partir d'un ou plusieurs capteurs de réaction indiquant un mouvement physique réel de l'outillage en fonction de la sortie ;
comparer le mouvement physique de l'outillage au mouvement physique anticipé associé aux entrées simulées ; et
produire une modification sur au moins l'un du ou des paramètres correspondant à la commande de l'outillage sur la base de l'information de retour en réponse à la détection d'une différence entre le mouvement physique de l'outillage et le mouvement physique anticipé.
